# EUROPEAN PATENT APPLICATION

(11) **EP 0 664 195 A1**
(43) Date of publication of application: **26.07.1995**
(21) Application number: 94918539.1
(22) Date of filing: 20.06.1994
(51) Int. Cl.: B29C 41/02, B29C 41/12, B29C 41/36

(54) **METHOD OF MANUFACTURING CYLINDRICAL BODY**

(30) Priority: 23.06.1993 JP 151773/93
(71) Applicant: NITTO DENKO CORPORATION, Osaka 567 (JP)
(72) Inventor: NAKAMURA, Masao, Ibaraki-shi Osaka 567 (JP); TOMITA, Toshihiko, Ibaraki-shi Osaka 567 (JP); IWAMOTO, Toshiaki, Ibaraki-shi Osaka 567 (JP); NAKAJIMA, Toshio, Ibaraki-shi Osaka 567 (JP); FUJITA, Tokio, Ibaraki-shi Osaka 567 (JP); UKAI, Hiroshi, Ibaraki-shi Osaka 567 (JP)
(74) Representative: Grünecker, Kinkeldey, Stockmair & Schwanhäusser Anwaltssozietät
(86) International application number: JP9400986
(87) International publication number: WO9500309

(57) **Abstract**

A method of manufacturing a cylindrical body according to the invention uses a cylindrical-shaped mold body, and an outer mold having substantially the same inner shape as the outer shape of the mold body or an inner mold having substantially the same outer shape as the inner shape of the cylindrical-shaped mold body. More specifically, when the outer mold is used, an organic polymer or its precursor solution is applied onto the outer peripheral surface of the cylindrical-shaped mold body, and then the outer mold is fitted onto the outer periphery of the cylindrical-shaped mold body and is caused to slide from one end of the mold body to the other end thereof to thereby form a coating layer of the organic polymer and the like on the outer peripheral surface of the cylindrical-shaped mold body. Then the coating layer is permitted to solidify, and the solidified coating layer is separated from the mold body to form a cylindrical-shaped body. Also, when the inner mold is used, the organic polymer and the like is applied onto the inner peripheral surface of the cylindrical-shaped mold body, and then the inner mold is fitted to the inner periphery of the cylindrical-shaped mold body and is caused to slide from one end of the mold body to the other end thereof to thereby form a coating layer of the organic polymer and the like on the inner peripheral surface of the cylindrical-shaped mold body. Then the coating layer is permitted to solidify, and the solidified coating layer is separated from the mold body to form a cylindrical-shaped body. In the method of manufacturing a cylindrical-shaped body according to the invention, it is possible to uniformly apply the organic polymer and the like on the peripheral surface of the cylindrical-shaped mold body while effecting deforming. Accordingly, the resultant cylindrical-shaped body is uniform in film thickness and free of bubbles.

## Description

### TECHNICAL FIELD

The present invention relates to a method of producing a seamless tubular member which is used to cover a general transport belt or a transfer belt or a fixing belt for an image-forming apparatus such as an electrophotographic copying machine, or a liquid or gas transport tube or pipe, etc.

### BACKGROUND ART

A cylindrical or polygonal tubular member is used according to the form such as a belt, etc., for covering the foregoing belts, tubes, pipes, etc. Such a tubular member is produced by the production method such as a centrifugal molding method, a spraying method, a dipping method, a bullet-form moving body coating method, etc. As the foregoing centrifugal molding method, there is a method disclosed, for example, in JP-B-60-15454 (the term "JP-B" as used herein means an "examined published Japanese patent application"), which is a production method wherein a necessary amount of an organic polymer or the precursor thereof is injected onto the inside surface of a cylindrical mold rotating at a high speed, the solution is spread over the inside surface of the mold by utilizing the centrifugal force, and after solidifying the solution by drying or a reaction, the solidified tubular layer is released from the inside wall of the mold. Further, the foregoing spraying method is a production method wherein a solution of an organic polymer or the precursor thereof is coated on the inside surface or the outside surface of a cylindrical mold by spraying the solution thereto from a spray nozzle and after solidifying the coated solution as in the centrifugal molding method described above, the solidified tubular layer is released from the mold. Furthermore, as the foregoing bullet-form moving body coating method, there is a method disclosed in JP-A-3-130149 (the term "JP-A" as used herein means an "unexamined published Japanese patent application"), which is a production method wherein a solution of an organic polymer, etc., is coated on the inside surface of a cylindrical mold, a bullet-form moving body is moved through the inside of the cylindrical mold to make the coated layer of the solution of the organic polymer uniform, and after solidifying the coated layer as in the centrifugal molding method described above, the solidified tubular layer is released from the inside wall of the mold. The foregoing dipping method is a production method wherein by dipping a cylindrical mold in a solution of an organic polymer, etc., and gradually withdrawing the mold, the solution of the organic polymer, etc., is coated on the inside surface and the outside surface of the cylindrical mold by utilizing the surface tension, and after solidifying the coated layers, the solidified tubular layers are released from the inside surface and the outside surface of the mold.

By these production methods, tubular members can be produced but each production method has various problems and also these production methods have a common problem that the film or layer thickness of the tubular member obtained becomes ununiform. That is, in the foregoing centrifugal molding method, since a load cannot be uniformly applied to the radial direction of the cylindrical mold owing to the principle of utilizing a centrifugal force, it is impossible to uniformly spread the solution of the organic polymer, and also, in the case of using the solution having a high viscosity, spreading of the solution becomes insufficient, whereby the layer thickness of the tubular member obtained becomes ununiform. Furthermore, there is a problem that the centrifugal molding method requires an expensive apparatus such as a centrifugal apparatus, etc., and also it is difficult to apply the method for the production of a small-sized tubular member. On the other hand, in the spraying method, for obtaining a uniform thickness of the coated layer, it is necessary to keep a constant distance between the coating surface and the spray nozzle. However, it is difficult to keep the constant distance between the inside surface of the tubular mold, which is the coating surface, and the spray nozzle, and the coated layer is liable to become unevenness, whereby the layer thickness of the tubular member obtained becomes ununiform. Also for spraying the solution of the organic polymer from the nozzle, it is necessary to decrease the viscosity of the solvent but for the purpose, a large amount of a solvent is required, thereby increasing the cost. In the dipping method, it is necessary to strictly manage the concentration of the solution of the organic polymer and the coated layer is formed on the portions which are not required to be coated, which is disadvantageous in cost. When a solution having a low rate of volatilization is used, a long time is required until the coated layer is solidified, whereby a liquid sag, foams, etc., occur during the time and thus the layer thickness of the tubular member obtained by the method becomes ununiform. Furthermore, in the foregoing bullet-form moving body coating method, there is a problem that the scatter of the thickness of the tubular member obtained is very large.

As described above, in the conventional production methods of tubular members, it is difficult to produce a tubular member of a high quality having a uniform layer thickness and having no foam and there are problems that the cost for the product is high and the production steps are complicated. When a fixing belt and a transfer belt of an electrophotographic copying machine are covered using such a tubular member having an ununiform layer thickness, a fixing temperature unevenness and fixing pressure unevenness occur to form an uneven density in the duplicated images obtained, whereby it becomes difficult to obtain uniform images. Since in general, the strength of a tubular member is in proportion to the layer thickness thereof, when a tubular member having an ununiform layer thickness is used for covering a transport belt, the thin portion of the tubular member is extended by the tension applied to the tubular member, which results in causing a problem that the transport belt moves zigzag.

The present invention has been made under such circumstances and the object of the present invention is to provide a production method of a tubular member capable of simply producing a tubular member of a high quality having a uniform layer thickness and having no foams at a low cost.

### DISCLOSURE OF THE INVENTION

For attaining the object described above, the present invention has the construction that an organic polymer or the precursor thereof is adhered to at least one surface of the inside surface and the outside surface of a tubular mold in layer form and after solidifying the layer in the layer state, the tubular member formed on the surface of the mold is released from the mold.

That is, as a result of a series of investigations to attain the foregoing object, the inventors have found that when a tubular mold is used, an organic polymer is adhered in a layer form onto at least one surface of the inside surface and the outside surface of the mold, and the layer is solidified in the layer state, the layer thickness of the tubular member(s) becomes uniform and also the organic polymer solution, etc., having a high concentration can be used. Furthermore, it has also been found that since in this case, a specific operation and a specific apparatus, etc., are not required, the tubular members can be easily prepared at low cost. Thus, the inventors have succeeded in achieving the present invention based on these findings. By the present invention, it becomes possible to provide a seamless tubular member having a uniform layer thickness at a low cost.

The present invention is described in detail below.

The production method of a tubular member according to the present invention is carried out using a tubular mold and an organic polymer or the precursor thereof.

As the material for the tubular mold, there is no particular restriction if the material has a corrosion resistance to a solvent which is used to dissolve the organic polymer or the precursor thereof, and examples thereof are a glass, aluminum, iron, brass, stainless steel, etc. From the standpoint of the releasable property of the tubular member formed, a releasing agent such as a fluorine type releasing agent, a silicone type releasing agent, etc., may be coated on the surface(s) of the tubular mold.

There is no particular restriction on the organic polymer which is used in the present invention and there are, for example, noncrystalline thermoplastic resins which are relatively easy to dissolve in a solvent. As such a resin, for example, polyurethane, polystyrene, cellulose triacetate, polymethyl methacrylate, polyphenylene ether, polysulfone, polyether sulfone, polyacrylate, polyether imide, and polyamide are used. An organic polymer insoluble in a solvent can also be used and examples of such a polymer are tetrafluoroethylene (PTFE), a tetrafluoroethylene/hexafluoropropylene copolymer (FEP), and a tetrafluoroethylene/perfluoroalkyl vinyl ether copolymer. In these polymers, the use of polyurethane, etc., is preferred.

As the precursors, the precursors of the organic polymers described above can be used in the present invention. Furthermore, thermosetting resins such as polyamic acid (or polyamide acid), a polyamidoimido resin, a polybenzimidazole resin, an epoxy resin, a saturated polyester, diallyl phthalate, a silicone resin, etc., can be also used. In these resins, the use of polyamic acid, etc., is preferred.

The organic polymer or the precursor thereof described above is dissolved or dispersed in a solvent, etc., at use. There is no particular restriction on the solvent and as such a solvent, there are methylene chloride, methanol, toluene, metyl ethyl ketone, N-methyl-2-pyrrolidone, dimethylformamide, etc. These solvents may be used alone or as a combination thereof. A viscosity in the case of dissolving or dispersing the foregoing organic polymer or the precursor thereof in the foregoing solvent is in the range of from 0.1 to 5,000 poise, and preferably from 100 to 4,000 poise. If the viscosity is lower than 0.1 poise, the viscosity becomes too low and the coating property onto the tubular mold deteriorates. On the other hand, if the viscosity is over 5,000 poise, the viscosity becomes to too high and the workability at the coating operation is lowered.

Using the materials such as the tubular mold, the organic polymer, etc., the tubular member can be produced by a 1st method using an external mold or a 2nd method using an internal mold as described below.

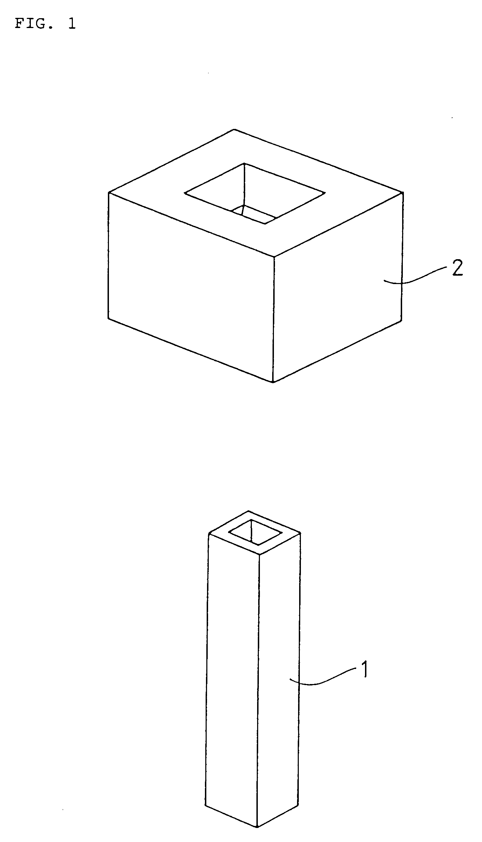

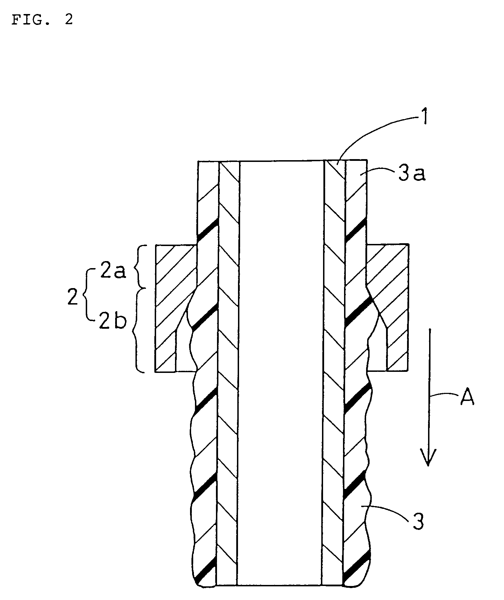

The 1st method is a method of using a tubular mold and an external mold having the inside form almost the same as the outside form of the tubular mold. By the method, a regular square tubular member can be produced as follows. That is, a regular square tubular mold 1 and a regular square external mold 2 as shown in Fig. 1 of the accompanying drawings are prepared. An organic polymer solution 3 having a definite viscosity is then coated on the outer surface of the regular square tubular mold 1. In this case, there is no particular restriction on the coating method and knife coating, nozzle coating, etc., can be employed. As shown in Fig. 2, the foregoing external mold 2 is overlaid around the outside of the mold 1 having coated thereon the foregoing organic polymer solution 3 and by sliding the external mold 2 along the arrow A from one end side of the mold 1 to the other end side thereof, a coated layer 3a of the organic polymer which is defoamed and made uniform is formed. There is no particular restriction on the method of sliding the foregoing external mold and a method by hand working, a method by reducing a pressure or applying a pressure, a mechanical method such as a motor, etc., a spontaneous falling method by a self gravity, or a method of combining these methods can be used. The inside form of the external mold 2 is almost the same as the outside form of the foregoing mold 1 and the external mold the inside form of which is composed of a layer thickness controlling portion 2a and a solution storing portion 2b as shown in Fig. 2 may be used. In the present invention, even when the external mold 2 has such a layer thickness controlling portion 2a, the inside form of the external mold is also included in the form almost the same as the outside form of the mold 1. By using the external mold equipped with the layer thickness controlling portion, overlaying the external mold 2 around the mold 1 becomes easy and also the workability and the precision of the layer thickness formed are improved. By solidifying the coated layer 3a by drying or by causing a reaction, a tubular member is formed on the outside surface of the mold 1. By releasing the tubular member, a regular square tubular member having a uniform layer thickness and having no foams can be obtained. In addition, since in the foregoing tubular mold, the portion used is the outside surface of the mold, a polygonal pillar-form mold (a solid mold) can be used in place of the tubular mold (a hollow mold). Thus, in the present invention, the term "a tubular mold" includes such a square pillar-form mold (a solid mold).

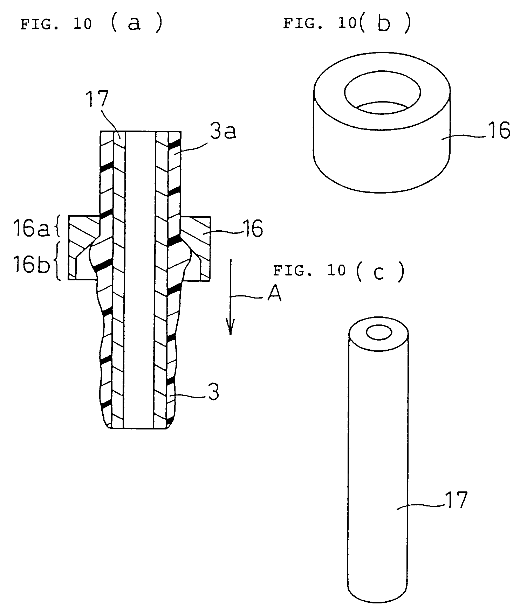

The 1st method was explained in the case of producing the polygonal tubular member (a regular square tubular member) as an example but the 1st method is not limited to the case but can be applied for the production of a cylindrical tubular member. For example, as shown in Fig. 10(b) and Fig 10(c), a cylindrical external mold 16 and a cylindrical tubular mold 17 are prepared. By the same manner as described above, an organic polymer solution 3 is coated on the outside surface of the cylindrical mold 17. As shown in Fig. 10(a), the foregoing external mold 16 is overlaid around the outside of the cylindrical tubular mold 17 and by sliding the external mold 16 along the arrow A from one end of the cylindrical tubular mold 17 to the other end thereof by the same manner as described above, a coated layer 3a of the organic polymer, which is defoamd and made uniform, is formed. In Fig. 10, 16a shows a layer thickness controlling portion and 16b shows a solution storing portion. By solidifying the coated layer 3a and releasing the solidified coated layer as described above, a cylindrical tubular member having a uniform layer thickness and having no foams can be obtained.

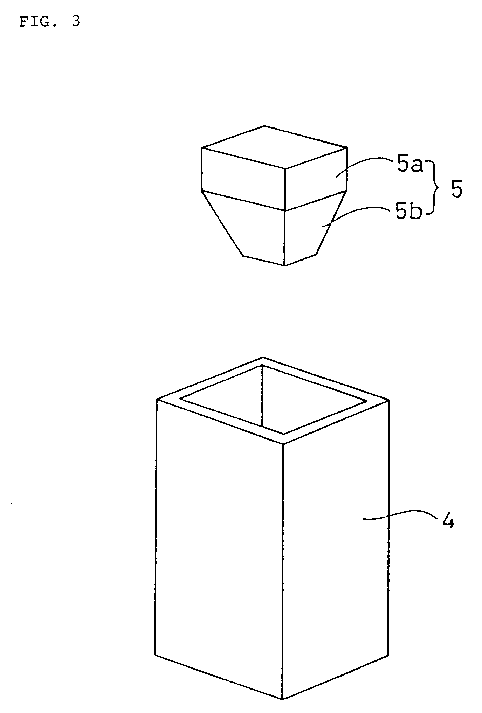

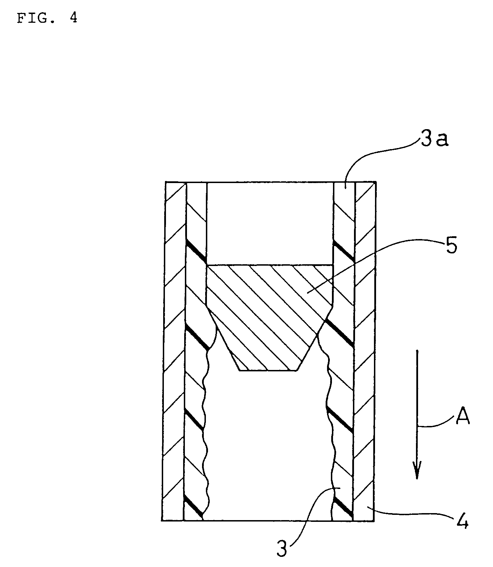

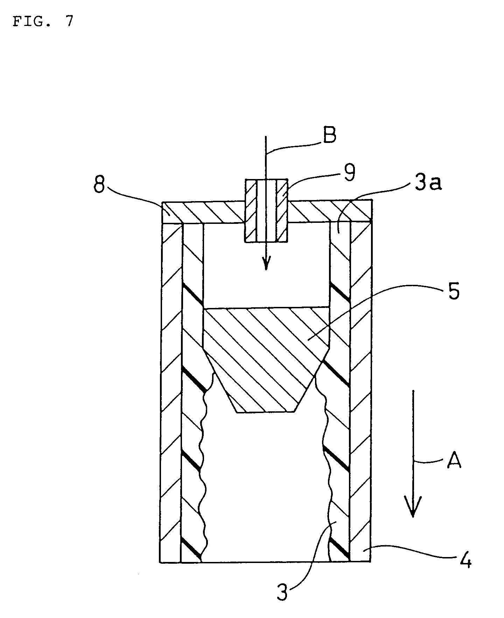

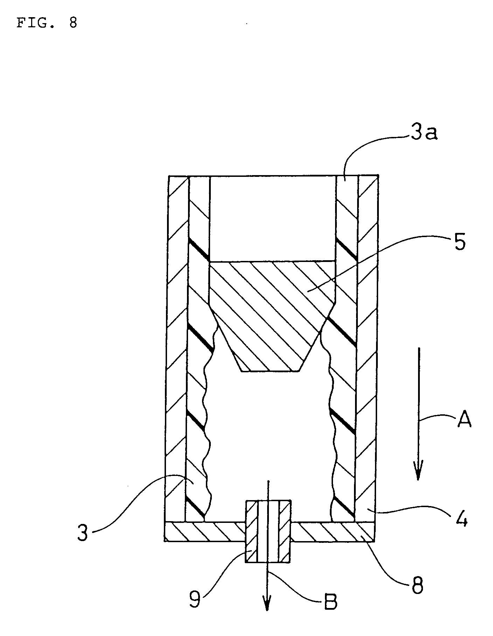

The 2nd method is a method of using a tubular mold and an internal mold having the outside form almost the same as the inside form of the tubular mold. By the method, for example, a regular square tubular member can be produced as follows. That is, as shown in Fig. 3, a regular square tubular mold 4 and an internal mold 5 are prepared. An organic polymer solution 3 having a definite viscosity is coated on the inside surface of the foregoing regular square tubular mold 4. Coating is carried out by the same manner as in the 1st method described above. As shown in Fig. 4, the internal mold 5 is inserted in the inside of the mold 4 having coated on the inside surface thereof the foregoing organic polymer solution 3 and by sliding the internal mold 4 along the arrow A from one end side of the mold 4 to the other end side thereof, a coated layer 3a, which is defoamed and made uniform, is formed. The internal mold 5 is slided by the same manner as in the 1st method described above or by the method shown in Fig. 7 or Fig. 8. That is, as shown in Fig. 7, the end portion of the mold 4 at the opposite side to the portion toward which the internal mold 5 is moved is closed using a plug 8. A fluid is introduced into the mold 4 from an opening 9 formed in the plug 8 to the direction of the arrow B to pressurize the inside of the mold 4, whereby the internal mold 5 can be slided. As the fluid, a gas such as air, etc., is used. Further, as shown in Fig. 8, the end portion of the mold 4 at the side toward which the internal mold 5 is moved is closed using a plug 8. By sucking a fluid in the inside of the mold 4 through an opening 9 formed in the plug 8 to the direction of the arrow B, the pressure in the inside of the mold 4 is reduced, whereby the internal mold 5 can be slided. As the internal mold 5, it is preferred to use the internal mold having the structure composed of a layer thickness controlling portion (a square pillar) 5a and a solution storing portion (a square truncated pyramid) 5b as shown in Fig. 3. In the present invention, the internal mold having such a layer thickness controlling portion is also included in the internal mold having the form almost the same as the inside form of the tubular mold as in the case of the 1st method described above. By using such an internal mold, the insertion of the internal mold in the mold 4 becomes easy and the workability and the precision of the layer thickness are improved as in the case of the 1st method. By solidifying the coated layer 3a by drying or by causing a reaction, a tubular member is formed at the inside surface of the mold 4. By releasing the solidified layer, a regular square tubular member having a uniform layer thickness and having no foams can be obtained.

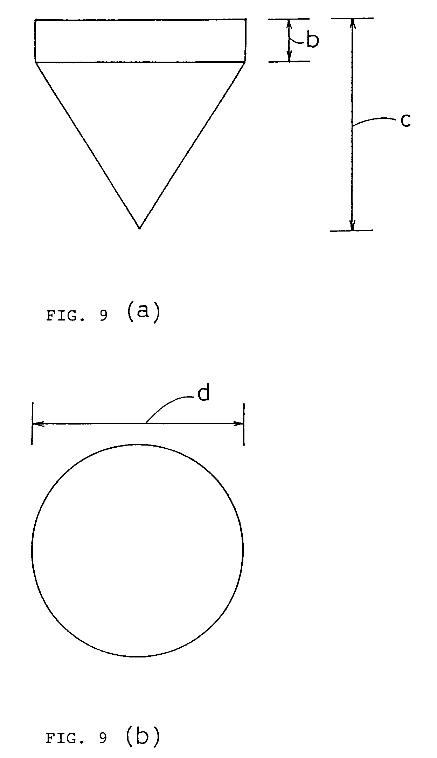

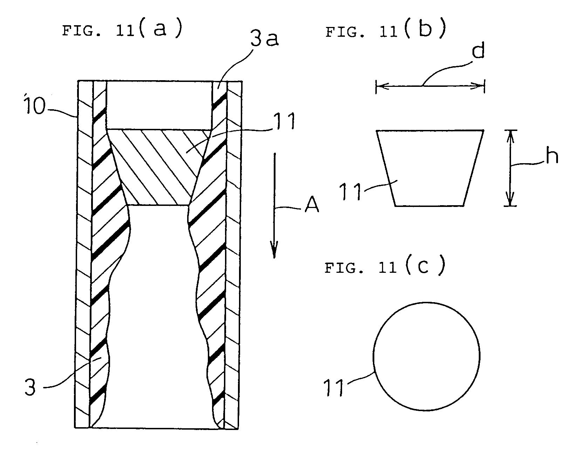

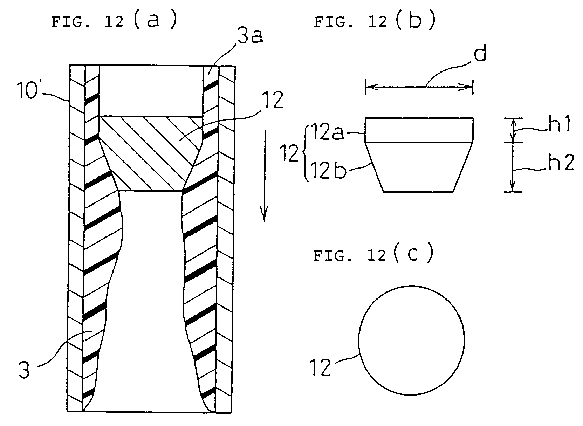

The 2nd method is also not limited to the production of the polygonal tubular member as described above but can be applied to the production of a cylindrical tubular member. For example, as shown in Fig. 11(a), a cylindrical mold 10 and an internal mold 11 of a truncated conical form are prepared. An organic polymer solution 3 is coated on the inside surface of the cylindrical mold 10 as described above. As shown in Fig. 11 (a), the internal mold 11 is inserted in the cylindrical mold 10 and by sliding the internal mold 11 along the arrow A from one end of the cylindrical mold 10 to the other end thereof by the same manner as described above, a coated layer 3 of the organic polymer, which is defoamed and made uniform, is formed. In Fig. 11, (b) is a side view of the internal mold 11 and (c) is a plain view thereof. Further, in Fig. 11, d shows a maximum diameter of the internal mold 11 and h shows a height of the internal mold. By solidifying the coated layer 3a and releasing the solidified layer as described above, a cylindrical tubular member having a uniform layer thickness and having no foams can be obtained. On the other hand, an internal mold composed of a layer thickness controlling portion 12a and a solution storing portion 12b shown in Fig. 12(b) as a side view may be used. Fig. 12(a) is a cross-sectional view showing the state of coating an organic polymer solution 3 on the inside surface of a cylindrical mold 10 using the foregoing internal mold 12. In Fig. 12, (b) shows a side view of the internal mold 12 and (c) shows a plain view of the internal mold 12. Further, d shows a maximum diameter of the internal mold 12, h₁ shows a height of the layer thickness portion 12a (columnar portion) and h₂ shows a height of the solution storing potion 12b (truncated conical portion). Furthermore, an internal mold having a conical solution storing portion as shown in Fig. 9 may be used in the present invention. In Fig. 9, d shows a maximum diameter of the internal mold, b shows a height of the solution storing portion, and c shows a height of the internal mold.

As described above, by the 1st method and the 2nd method, by attaching in layer form an organic polymer on the inside surface or the outside surface of a tubular mold, a coated layer having a uniform thickness and having no foams can be easily formed. Further, by changing the sizes and forms of the external mold, the internal mold, and the tubular mold, the layer thickness of the tubular member obtained can be desirably determined and tubular members having various forms such as a polygonal form, a cylindrical form, etc., can be produced. In the production process of a tubular member of the present invention, an organic polymer solution, etc., having a high concentration can be used, whereby the use of a solvent can be saved.

As described above, the present invention is a method of producing a tubular member, which comprises adhering in a layer form an organic polymer or the precursor thereof on at least one surface of the inside surface and the outside surface of a tubular mold. Accordingly, since specific apparatus, etc., are not used in the present invention, the cost can be restrained low. Further, when, for example, an external mold or an internal mold having the form almost the same as the outside form or the inside form of the tubular mold is used, the organic polymer, etc., can be simply adhered in layer form on the inside surface or the outside surface of the tubular mold and a coated layer thereof having no foams and having a uniform layer thickness can be formed, whereby a tubular member of a high quality having a uniform layer thickness and containing no foams can be produced. Also, since in the production method of a tubular member of the present invention, an organic polymer solution having a high concentration can be used and also working such as a concentration management of the organic polymer, etc., becomes unnecessary, the production step becomes simple and the productivity is improved. Furthermore, since the production method of the present invention can be applied to the production of small tubular members, polygonal tubular members, cylindrical tubular members, etc., the present invention can provide tubular members having various sizes and forms at low costs.

### BRIEF EXPLANATION OF THE DRAWINGS

Fig. 1 is a slant view showing a regular square tubular mold and an external mold which are used in one example of the present invention,
Fig. 2 is a cross sectional view explaining the production method of a regular square tubular member using the regular square tubular mold and the external mold described above,
Fig. 3 is a slant view showing a regular square tubular mold and an internal mold which are used in one example of the present invention,
Fig. 4 is a cross sectional view explaining the production method of a regular square tubular member using the regular square tubular mold and the internal mold described above,
Fig. 5 is a slant view showing a regular hexagonal pillar mold and an external mold which are used in one example of the present invention,
Fig. 6 is a cross sectional view explaining the production method of a regular hexagonal tubular member using the regular hexagonal pillar mold and the external mold described above,
Fig. 7 is a view explaining a method of sliding the internal mold in one example of the present invention,
Fig. 8 is a view explaining a method of sliding the internal mold in other example of the present invention,
Fig. 9(a) is a side view of an internal mold which is used in one example of the present invention and (b) is a plain view thereof,
Fig. 10(a) is a cross sectional view explaining the production of a cylindrical tubular member using a cylindrical external mold and a cylindrical mold, (b) is a slant view of the external mold, and (c) is a slant view of the cylindrical mold,
Fig. 11(a) is a cross sectional view explaining the production of a cylindrical tubular member using an internal mold of a truncated conical form and a cylindrical mold, (b) is a side view of the internal mold, and (c) is a plain view of the internal mold,
Fig. 12(a) is a cross sectional view explaining the production of a cylindrical tubular member using an internal mold equipped with a layer thickness controlling portion and a cylindrical mold, (b) is a side view of the internal mold, and (c) is a plain view of the internal mold, and

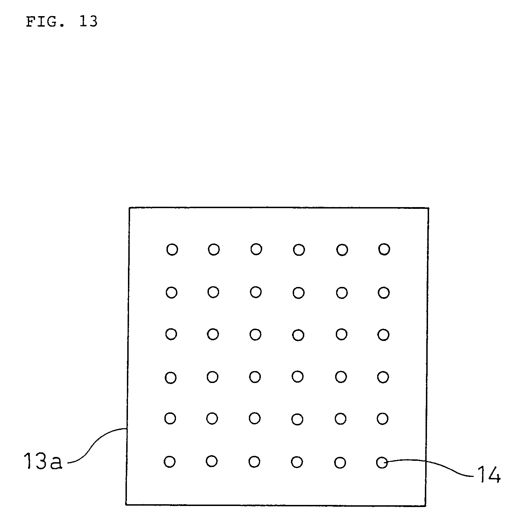

Fig. 13 a view showing the state of measuring the uniformity of the layer thickness of a tubular member.

### BEST MODE FOR PRACTICING THE INVENTION

The present invention is explained by the Examples in combination with the Comparative Examples.

### Example 1

By dissolving 200 parts by weight (hereinafter referred to as "parts" for simplicity) of a cellulose triacetate powder, CA-435-755 (trade name, made by Eastman Kodak Company) as an organic polymer in mixed solvent of 700 parts of methylene chloride and 100 parts of methanol, an organic polymer solution having a viscosity of 1300 poise was prepared. Next, a regular square tubular mold 4 made of stainless steel and an internal mold 5 made of stainless steel as shown in Fig 3 were prepared. The mold 4 was a regular square tubular mold having an inside size of the length 100 mm x the width 100 mm x the height 150 mm. The internal mold 5 was composed of a regular square pillar 5a and a regular square truncated cone 5b. The size of the regular square pillar was length 99.5 mm x width 99.5 mm x height 15 mm and the height of the regular square truncated cone was 50 mm. The organic polymer solution prepared above was coated on the inside surface of the mold 4 using a spatula. As shown in Fig. 4, the internal mold 5 was inserted in the inside of the mold 4 and was slided from the upper end of the mold to the lower end thereof by spontaneous falling to form a coated layer 3a of the organic polymer. After drying the coated layer 3a at 30°C for 10 minutes and further drying at 80°C for 10 minutes, the layer was cooled to room temperature. By releasing the dried coated layer, a regular square tubular member having a layer thickness of 21 ± 1 µm, a length of 100 mm, and one side length of the regular square of 100 mm was obtained.

On the tubular member obtained above, the uniformity of the layer thickness was determined. That is, the tubular member 13 was cut open in the lengthwise direction to form a sheet 13a. At plural measuring points 14 (12 points) on the surface of the sheet 13a, the thickness of each point was measured using a micrometer. From the measured values of the thicknesses, the scatter of the layer thickness was evaluated. Together with the evaluation of the layer thickness, the presence or absence of foams was visually observed. As a result, it was confirmed that the tubular member had a uniform layer thickness and had no foams.

### Example 2

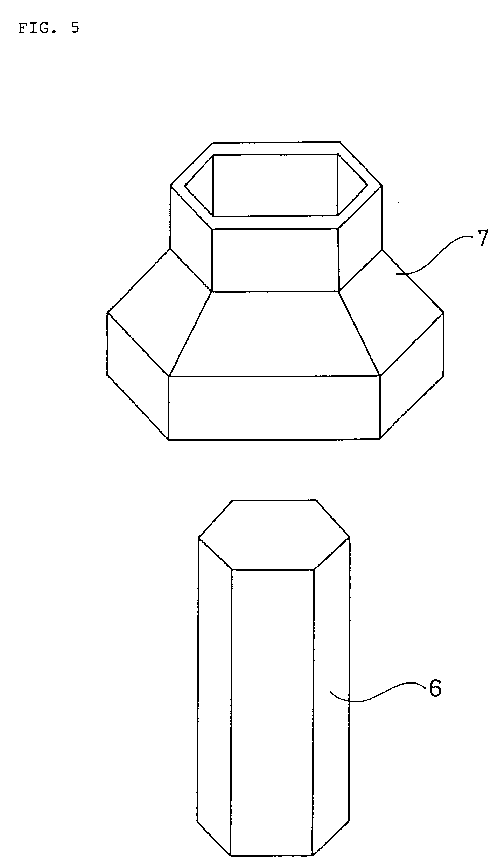

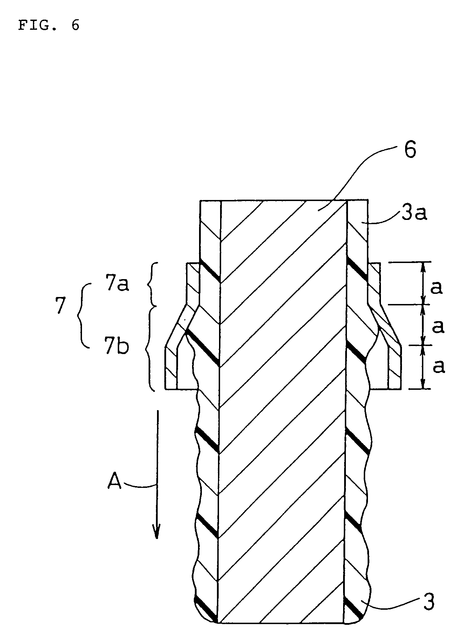

By dissolving 400 parts of a polyurethane elastomer, Pellethane 90AE (trade name, made by MD Kasei K.K.) as an organic polymer in 1600 parts of a mixed solvent of toluene and methyl ethyl ketone (mixing ratio; toluene : methyl ethyl ketone = 1 : 4), an organic polymer solution having a viscosity of 250 poise was prepared. Next, a regular hexagonal pillar-form mold 6 made of aluminum and an external mold 7 made of aluminum as shown in Fig. 5 were prepared. The mold 6 was a regular hexagonal pillar wherein a base thereof was a regular hexagon having one side length of 25 mm and the height was 300 mm. Further, the external mold 7 was composed of a layer thickness controlling portion 7a and a solution storing portion 7b as shown in Fig. 6 as the cross sectional view thereof. The inside form of the layer thickness controlling portion 7a was a regular hexagon having a side length of 23.75 mm and the inside form of the solution storing portion 7b was the magnified form of the regular hexagon of the layer thickness controlling portion. The side length of the regular hexagon of the maximum inside form of the solution storing portion 7b was 28.75 mm. Also, in Fig. 6, the length of a was 20 mm. The organic polymer solution was coated on the outside surface of the regular hexagonal pillar using a spatula. As shown in Fig. 6, the external mold 7 was overlaid around the outside of the mold 6 having coated thereon the organic polymer and by sliding the external mold 7 along the arrow A by a method of pulling with a motor at a speed of 50 cm/minutes from one end side of the mold 6 to the other end side thereof, a coated layer 3a of the organic polymer was formed. After drying the coated layer 3a with a dryer at 50°C for 20 minutes and further drying at 120°C for 20 minutes, the coated layer was cooled to room temperature. Thereafter, by releasing the dried coated layer, a regular hexagonal tubular member having a layer thickness of 50 ± 2 µm, the length of 200 mm, and the one side length of the regular hexagon of the inside form of 25 mm was obtained.

When the uniformity of the layer thickness and the presence or absence of foams were evaluated on the tubular member as in Example 1, it was confirmed that the tubular member had a uniform layer thickness and had no foams.

### Example 3

An organic polymer solution was prepared as follows. That is, pyromellitic acid dianhydride was mixed with 4,4'-diaminodiphenyl ether at an almost equimolar ratio and the mixture was reacted in N-methyl-2-pyrrolidone (monomer concentration: 20% by weight) at 20°C for 4 hours to obtain a polyamic acid solution having a viscosity of 4,000 poise (25°C). The polyamic acid solution was coated on the inside surface of the regular square tubular mold and the internal mold as used in Example 1. By heat-treating the coated layer successively in the order of 150°C x 30 minutes, 200°C x 30 minutes, 250°C x 30 minutes, and 300°C x 30 minutes, the solvent removal and the imide conversion were carried out and the layer was then cooled to room temperature. By releasing the solidified coated layer from the mold, a regular square tubular member having a layer thickness of 22 ± 1 µm, a length of 100 mm, and the side length of the regular square of the inside form of 100 mm was obtained.

When the uniformity of the layer thickness and the presence or absence of foams were evaluated as in Example 1 on the tubular member obtained, it was confirmed that the tubular member had a uniform layer thickness and had no foams.

### Example 4

An aqueous dispersion of an ethylene tetrafluoride resin (ND-1, trade name, made by Daikin Industries, Ltd., solid content: 60% by weight, viscosity: 0.2 poise) was used as an organic polymer. The dispersion was coated on the inside surface of a cylindrical mold made of stainless steel having an inside diameter of 100 mm (wall thickness 5 mm) and a height of 200 mm and the internal mold shown in Fig. 9 was used. Fig. 9(a) is a side view of the internal mold and Fig 9(b) is a plain view of the internal mold. In Fig. 9, b is a length of 10 mm, c is a length of 50 mm, and d is a length of 99.850 mm. The coated layer was heat-treated successively in the order of 150°C x 30 minutes, 250°C x 10 minutes, and 380°C x 10 minutes, to remove water and a surface active agent, followed by burning. Thereafter, the coated layer was cooled to room temperature, and then immersed in hot water at 100°C. The coated layer thus solidified was released from the mold to obtain a tubular member having a layer thickness of 21 ± 1 µm, a length of 100 mm, and an outside diameter of 100 mm.

When the uniformity of the layer thickness and the presence or absence of foams were evaluated on the tubular member obtained, it was confirmed that the tubular member had a uniform layer thickness and had no foams.

### Example 5

The polyamic acid solution as used in Example 3 was used as an organic polymer. The solution was coated on the inside surface of a cylindrical mold made of stainless steel having an inside diameter of 50 mm (wall thickness 5 mm) and a height of 200 mm using the truncated conical internal mold 11, as shown in Fig. 11(a). In Fig. 11, d is a length of 49.466 mm and h is a length of 70 mm. By heat-treating the coated layer successively in the order of 150°C x 30 minutes, 200°C x 30 minutes, 250°C x 30 minutes, and 300°C x 30 minutes, the solvent removal and the imide conversion were carried out and thereafter, the coated layer was cooled to room temperature. By releasing the coated layer from the mold, a tubular member having a length of 100 mm and a layer thickness of 25 ± 1.5 µm was obtained.

When the uniformity of the layer thickness and the presence or absence of foams were evaluated on the tubular member obtained, it was confirmed that the tubular member had a uniform layer thickness and had no foams.

### Example 6

The polyamic solution as used in Example 3 was used as an organic polymer. The solution was coated on the inside surface of a cylindrical mold made of stainless steel having an inside diameter of 50 mm (wall thickness 5 mm) and a height of 200 mm, using the internal mold 12 composed of the layer thickness controlling portion (column) 12a and a solution storing portion (truncated cone) 12b, as shown in Fig. 12(a). In Fig. 12, d is a length of 49.466 mm, h₁ is a length of 30 mm, and h₂ is a length of 40 mm. By heat-treating the coated layer successively in the order of 150°C x 30 minutes, 200°C x 30 minutes, 250°C x 30 minutes, and 300°C x 30 minutes, the solvent removal and imide conversion were carried out and thereafter, the coated layer was cooled to room temperature. By releasing the solidified coated layer from the mold, a tubular member having a length of 100 mm and a layer thickness of 25 ± 1.0 µm was obtained.

When the uniformity of the layer thickness and the presence or absence of foams were evaluated on the tubular member obtained, it was confirmed that the tubular member had a uniform layer thickness and had no foams.

### Example 7

The polyamic acid solution as used in Example 3 was used as an organic polymer solution and also the cylindrical external mold 16 (the inside diameter of the layer thickness controlling portion 16a: 50.432 mm) and the cylindrical mold 17 made of stainless steel having an inside diameter of 50 mm (wall thickness: 5 mm) and a height of 200 mm as shown in Fig. 10 (b) and (c) were prepared. The solution was coated on the outside surface of the cylindrical mold 17 using the external mold 16. Thereafter, by heat-treating the coated layer successively in the order of 150°C x 30 minutes, 200°C x 30 minutes, 250°C x 30 minutes, and 300°C x 30 minutes, the solvent removal and the imide conversion were carried out and the coated layer was then cooled to room temperature. By releasing the solidified coated layer from the mold, a tubular member having a length of 150 mm and a layer thickness of 20 ± 2 µm was obtained.

When the uniformity of the layer thickness and the presence or absence of foams were evaluated as in Example 1 on the tubular member obtained, it was confirmed that the tubular member had a uniform layer thickness and had no foams.

### Comparative Example 1

The cellulose triacetate solution as used in Example 1 was used as an organic polymer solution and coating of the solution on the inside surface of the regular square tubular mold as used in Example 1 was tried using a spray gun for inside surface coating (SA-29C, trade name, manufactured by Iwata Toso K.K., nozzle caliber 0.5 mm). However, owing to the high viscosity of the organic polymer solution, cobwebbing and clogging of the nozzle occurred, whereby uniform coating could not be carried out.

### Comparative Example 2

The cellulose triacetate solution as used in Example 1 was prepared as an organic polymer solution. The regular square tubular mold as used in Example 1 was immersed in the polymer solution and then withdrawn at a speed of 20 mm/minute. After drying the coated layers at the stood state successively in the order of 30°C x 10 minutes and 80°C x 10 minutes, the solidified coated layer was released from the inside surface of the mold to obtain a regular square tubular member having a layer thickness of 30 ± 10 µm, the length of 150 mm, and the one side length of the regular square of the inside form of 100 mm. Since the coated layer was dried in the stood state of the mold, in the tubular member obtained, the layer thickness was ununiform between the one end side and the other end side and also the tubular member contained foams. Furthermore, a tubular member was also formed on the outside surface of the mold, which was an unnecessary portion.

## Claims

1. A method of producing a tubular member, which comprises adhering an organic polymer or the precursor thereof in a layer form onto at least one surface of an inside surface and an outside surface of a tubular mold, solidifying the coated layer in the layer state, and releasing the tubular member formed on the surface of the mold from the mold.

2. A method of producing a tubular member as claimed in claim 1, wherein the organic polymer or the precursor thereof is coated on the outside surface of the tubular mold, an external mold having the inside form almost the same as the outside form of the mold is overlaid around the outside of the tubular mold, and the external mold is slided from one end side of the mold to the other end side thereof to form a tubular member on the outside of the tubular mold.

3. A method of producing a tubular member as claimed in claim 1, wherein the organic polymer or the precursor thereof is coated on the inside surface of the tubular mold, an internal mold having the outside form almost the same as the inside form of the tubular mold is inserted in the inside of the tubular mold, and the internal mold is slided from one end side of the mold to the other end side thereof to form a tubular member on the inside surface of the tubular mold.

4. A method of producing a tubular member as claimed in claim 2, wherein the external mold is composed of a solution storing portion and a layer thickness controlling portion.

5. A method of producing a tubular member as claimed in claim 3, wherein the internal mold is composed of a solution storing portion and a layer thickness controlling portion.
